# EUROPEAN PATENT SPECIFICATION

(11) **EP 1 441 229 B1**
(45) Date of publication and mention of the grant of the patent: **27.12.2006**
(21) Application number: 04001087.8
(22) Date of filing: 20.01.2004
(51) Int. Cl.: G01N 35/02, G01N 35/10, B01L 3/00

(54) **Method and automated microfluidic system for detecting proteins in biological samples**
Verfahren und automatisiertes Microfluidsystem zum Nachweis von Proteinen in biologischen Proben
Méthode et système micro-fluidique automatisé pour la détection de protéines dans des échantillons biologiques

(30) Priority: 20.01.2003 KR 2003003668
(43) Date of publication of application: 28.07.2004
(73) Proprietor: SAMSUNG ELECTRONICS CO., LTD., Suwon-si, Gyeonggi-do (KR)
(72) Inventor: Deshmukh A Jay, Mountain View, CA, 94041 (US)
(74) Representative: Grünecker, Kinkeldey, Stockmair & Schwanhäusser Anwaltssozietät

(56) References cited:
- WO-A-00/78456
- WO-A-01/62377
- US-A- 6 033 911
- US-B1- 6 479 301

## Description

### BACKGROUND OF THE INVENTION

### 1. Field of the Invention

The present invention relates to a biomolecular detection apparatus, and more particularly, to an automated fluidic system for detecting protein in a biological sample.

### 2. Description of the Related Art

Most diagnostic methods involve a main step of detecting whether a particular protein exists in a biological sample. Various diagnostic methods, such as enzyme-linked immunosorbent assay (ELISA), radioimmunoassay (RIA), fluorometry, nuclear magnetic resonance spectroscopy, and colorimetric assay, have been widely used, with the ELISA method being the most common.

There are three technologies involved in detecting a particular protein by ELISA: an antigen-antibody chemical reaction technology, in which an antibody that can be immobilized on a substrate or can be labeled with an enzyme is reacted with a protein of interest; an optical detection technique, in which a color variation in the substrate caused by the reaction with the enzyme is optically measured; and a fluid handling technology, in which various fluids are supplied to a multi-well plate in a predetermined order and the multi-well plate is washed between the steps of supplying the various fluids.

The fluid handling technology requires elaborate manipulations by a skilled operator for each step, for example, pipetting fluid into the multi-well plate and flushing the fluid, and takes much time. Therefore, an automated fluid manipulation process to allow for easier protein detection and to reduce the time required for detection is required.

To meet this requirement, various automated systems for manipulating and assaying components in each reservoir when detecting protein using a multi-well plate have been developed.

Korean Laid-open Patent Publication No. 2003-43554 discloses a micro-fluidic control system that includes a series of channels that allow a very small fraction of fluid to pass.

Korean Laid-open Patent Publication No. 2002-71853 discloses a system and method for detecting and identifying various molecular events in a test sample. The system includes fluid storage reservoirs, a signal supply unit that transmits an input test signal, a detecting probe, and a signal detection unit.

U.S. Patent No. 6,033,911 discloses an automated assaying device that includes a plurality of controllable lumens arranged to form clusters, which are separately controlled according to sample inflow and outflow. This automated assaying device includes a unique washing system capable of washing the entire assaying system.

However, a series of assaying processes, including sample injection, channel washing, dye injection, channel washing, and sample detection, cannot be fully automated with the above-described conventional automated assay devices. In addition, the conventional automated assay systems require a separate power source and a skilled operator due to their structural complexity, for maintenance and repair as well as operation. Further, the conventional automated assay systems are expensive and uneconomical.

### SUMMARY OF THE INVENTION

The present invention provides an automated fluidic system that detects a particular protein in a biological sample by enzyme-linked immonosorbent assay (ELISA), in which a series of assay processes, beginning with sample injection and ending with detection, is automated with a simple structure, thereby allowing for convenient and quick detection of a particular protein in a biological sample without requiring skillful, elaborate manipulations by an operator.

In one aspect of the present invention, there is provided an automated microfluidic system that detects a protein in a biological sample, the system including: a cartridge reservoir part including a sample reservoir, a dye reservoir, and a plurality of control reservoirs that contain control solutions of various concentrations of the protein of interest , each of the sample reservoir, the dye reservoir, and the control reservoirs having a hydrophobic upper barrier connected to a compressed-air inlet and a hydrophobic lower barrier connected to a liquid outlet; a cartridge with a microfluidic channel that includes a sample detection part, a plurality of control detection parts, and a dye/buffer inlet part, each of the sample detection part and the control detection parts that have inlets connected to the liquid outlets of the sample reservoir and control reservoirs, respectively, an outlet, and antibodies immobilized on an inner surface, the dye/buffer inlet part having a dye inlet connected to a liquid outlet of the dye reservoir and a buffer inlet port; a compressed-air storage tank connected to the compressed-air inlets of the sample reservoir, the dye reservoirs, and the control reservoirs by valves; a buffer storage tank connected to the buffer inlet ports by valves; and a reader that measures the degrees of antigen-antibody reactions in the sample and control detection parts based on variations in dye color.

The present invention also provides a method of detecting a protein in a biological sample using the above automated microfluidic system, the method comprising: supplying compressed air through the compressed-air inlets to move a sample in the sample reservoir and controls in the control reservoirs into the sample detection part and the control detection parts, respectively, to induce antigen-antibody reactions therein; washing the sample detection part and the control detection parts by supplying a buffer through the buffer inlet port; supplying compressed air through the compressed-air inlets to move a dye in the dye reservoir through the dye/buffer inlet port into the sample detection part and the control detection parts; washing the sample detection part and the control detection parts by supplying a buffer through the buffer inlet port; and detecting whether the protein exists in the biological sample and quantitating the protein based on color variation data obtained from the antigen-antibody reactions in the sample detection part and the control detection parts.

### BRIEF DESCRIPTION OF THE DRAWINGS

The above and other features and advantages of the present invention will become more apparent by describing in detail exemplary embodiments thereof with reference to the attached drawings in which:
FIG. 1 is an illustration of a microfluidic channel according to the present invention;
FIG. 2 is an illustration of a microfluidic channel showing inlets for a sample, a control, a dye and a buffer solution, and antibodies attached to an internal surface of the micro-fluidic channel;
FIG. 3 is an illustration of a cartridge according to the present invention;
FIG. 4 is an illustration of an automated fluidic system according to the present invention, which includes the cartridge of FIG. 3, a compressed air storage tank, a buffer storage tank, and a detection unit; and
FIG. 5 is a 3-dimensional illustration of the cartridge according to the present invention using computer graphics.

### DETAILED DESCRIPTION OF THE INVENTION

An automated fluidic system according to an embodiment of the present invention includes a disposable cartridge, a compressed air storage tank, a buffer storage tank, and a detection unit.

The cartridge of the automated fluidic system according to the present invention includes a sample reservoir, control reservoirs, and a dye reservoir. Hereinafter, the sample reservoir, the control reservoir, and the dye reservoir will be collectively referred to as a cartridge reservoir part 9.

The sample reservoir contains a biological sample that contains a target protein of interest. Any biological sample, for example, blood, urine, cerebrospinal fluid, saliva, tissue fluid, which contains a target protein that can be detected by enzyme-linked immunosorbent assay (ELISA), may be used.

The control reservoirs contain a control solution of a known concentration of a target protein to be detected. The concentration of the target protein in the biological sample can be calculated using a calibration curve of the control solution.

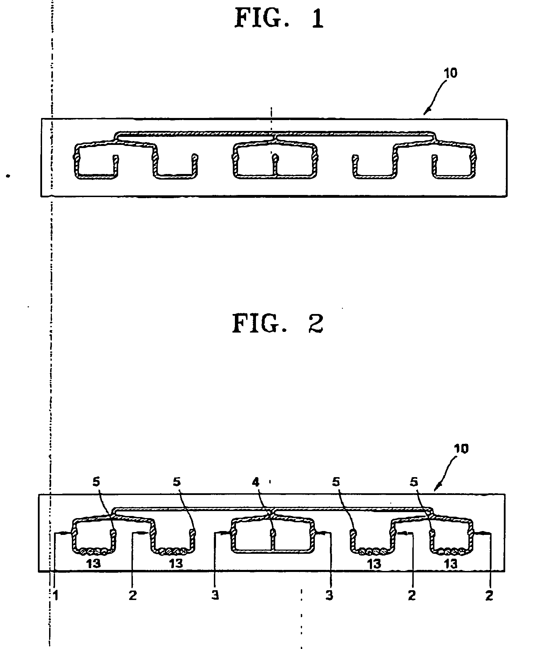

The dye reservoir contains a dye that can specifically bind to the target protein and label an antibody 13 (see FIG. 2) attached to the internal surface of a microfluidic channel 10, which will be described later. Any dye that can produce an optically detectable signal in response to the reaction of the antigen (target protein) and the antibody 13 attached to the interior surface of the microfluidic channel 10 may be used without limitations. Examples of such a dye that may be used in the present invention include a fluorescent dye, a chemiluminescent dye, a phosphorescent dye, and the like.

The cartridge, which includes the cartridge reservoir part 9, may be made of an acryl resin, a polyethylene resin, a polypropylene resin, etc. The cartridge may have a width of 5-10 cm, a length of 2-5 cm, and a height of 2-5 cm. Each of the sample reservoir, the control reservoirs, and the dye reservoir may have a capacity of 100-500 µL of liquid.

The cartridge reservoir part 9 includes one sample reservoir, one or two dye reservoirs, and two or three control reservoirs.

Each of the reservoirs in the cartridge reservoir part 9 has a hydrophobic upper barrier 7 connected to a compressed-air inlet 6 and a hydrophobic lower barrier 9 connected to a liquid outlet. These hydrophobic barriers 7 and 9, which are porous, may be manufactured to allow only air to pass, not liquid, in an atmospheric pressure. The lower hydrophobic barrier 8 may have a larger average pore size than the upper hydrophobic barrier 7.

The upper and lower hydrophobic barriers 7 and 8 are made of polytetrafluoro ethylene membranes. The upper hydrophobic barrier 7 has pores of a diameter that ranges from 0.2 µ m to 1 µ m. The lower hydrophobic barrier 8 has pores of a diameter that ranges from 2 µ m to 20 µ m. The upper hydrophobic barrier 7 allows a predetermined liquid to pass only when a higher pressure is applied than to the lower hydrophobic barrier 8. For example, when the upper hydrophobic barrier 7 has a pore diameter of 0.45 µ m and the lower hydrophobic barrier 8 has a pore diameter of 10 µ m, the former can pass water at a pressure of 2 atm whereas the later can pass water at a pressure of 0.1 atm. The gaps between the upper and lower hydrophobic barriers and each of the reservoirs in the cartridge reservoir part 9 may be sealed using, for example, O-rings.

The upper and lower ends of each of the reservoirs in the cartridge reservoir part 9 are blocked by the upper and lower hydrophobic barriers 7 and 8 that have different pore sizes, so that liquid in each of the reservoirs can be discharged only through the lower hydrophobic barrier 8, not the upper hydrophobic barrier 7, when a predetermined pressure is applied via a corresponding compressed-air inlet 6.

The liquid discharged through the lower hydrophobic barrier 8 flows toward a microfluidic channel 10. The microfluidic channel 10 has a structure as illustrated in FIG. 1, which is a plan view of the microfluidic channel 10.

In an automated microfluidic system shown in FIG. 2, which includes one sample reservoir, two dye reservoirs, and three control reservoirs, the microfluidic channel 10 includes one sample detection part, three control detection parts, and two dye/buffer inlet parts. Each of the sample and control detection parts has a sample inlet 1 or a control inlet 2, which are connected to the liquid outlets of the sample and control reservoirs, respectively, and an outlet 5, and includes antibodies 13 immobilized on an inner surface. The dye/buffer inlet parts have two dye inlets 3 connected to liquid outlets of the dye reservoir and a buffer inlet port 4.

The antibodies 13 that specifically bind to a target protein are attached to the four detection parts in the microfluidic channel 10. The four outlets 5 are connected to the microfluidic channel 10 to externally discharge air and liquid that have been used in the four detection parts.

The sample and control detection parts may be manufactured to have the same volume so that equal volumes of a sample and a control can be supplied into the sample and control detection parts, respectively, when an equal pressure is applied to both the sample and control reservoirs. In addition, the length of a portion of the microfluidic channel between the dye inlet 3 of the dye/buffer inlet part and the outlet 5 of the sample detection part may equal to the length of a portion of the microfluidic channel between the dye inlet 3 of the dye/buffer inlet part and the outlet 5 of one of the control detection parts so that equal volumes of a dye and a buffer can flow toward the sample and the control at the same rate when an equal pressure is applied from the compressed-air inlet 6. The length of a portion of the microfluidic channel between the buffer inlet port of the dye/buffer inlet part and the outlet of the sample detection part may be equal to the length of a portion of the microfluidic channel between the dye inlet of the dye/buffer inlet part and the outlet of one of the control detection parts.

The microfluidic channel 10 may be formed in a polydimethylsiloxan (PDMS) substrate, a glass substrate, a silicon substrate, etc. The microfluidic channel 10 may have a width of 50-500 µ m and a depth of 10-200 µ m. A substrate with the microfluidic channel 10 is combined with, for example, a glass chip, placed in a cartridge, and sealed using, for example, O-rings.

In addition to the above-described cartridge reservoir part 9 and the cartridge, which accommodates the microfluidic channel 10, the microfluidic system according to the present invention includes a compressed-air storage tank connected to the compressed-air inlets 6 by valves 11c, a buffer storage tank connected to the buffer inlet ports 4 by valves 11b, and a reader that measures the degrees of antigen-antibody reactions in the sample and control detection parts based on variations in dye color.

Compressed air and a buffer are stored in the compressed-air storage tank and the buffer storage tank, respectively. The compressed air and the buffer are forced to flow into the cartridge by a pump 12 that is connected commonly to the compressed-air storage tank and the buffer storage tank.

The reader used in the microfluidic system according to the present invention includes a photodetector that measures color variation data for the sample and the control reacted in the microfluidic channel 10. Any common photodetector that is widely used in the field may be used provided that it can detect a fluorescent signal, a chemiluminescent signal, a phosphorescent signal, etc.

The microfluidic system according to the present invention includes fluid ports as fluid exchange paths between the cartridge and each of the compressed-air storage tank, the buffer storage tank, and other external devices. The fluid ports include the compressed-air inlet ports 6 that are located on the tops of the reservoirs of the cartridge reservoir part 9, respectively, and allow compressed air blown from the compressed-air storage tank to pass, the buffer inlet port 4 connected to the microfluidic channel 10 and through which a buffer is supplied, and the outlets 5 connected to the microfluidic channel 10 and through which used gas and liquid are externally discharged from the microfluidic channel 10.

Flows of fluid through the compressed-air inlet ports 6, the buffer inlet port 4, and the outlets 5 are controlled by the valves 11a, 11b, and 11c that are operated by an automated control system, such as a computer. The valves 11a, 11b, and 11c may be controlled by means of a computer program, such as LabVlew^{™}. Each of the fluid ports is connected to one of the valves 11a, 11b, and 11c according to their function.

Valves which are connected to the compressed-air inlet ports 6 are three-way valves that are closed to allow external air to flow into the compressed-air inlet ports 6 and are opened toward a pump 12 so that compressed air enters the compressed-air inlet ports 6.

A valve which is connected to the buffer inlet port 4 is a two-way valve that is closed to block a buffer in the buffer storage tank from entering the microfluidic channel 10 and is opened to allow the buffer to enter the microfluidic channel 10.

Valves which are connected to the outlets 5 are two-way valves that are opened to externally discharge gas and liquid used in the microfluidic channel 10.

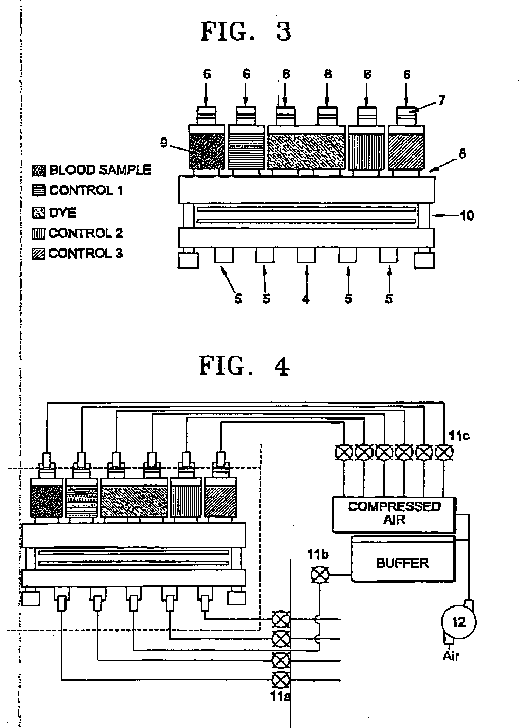

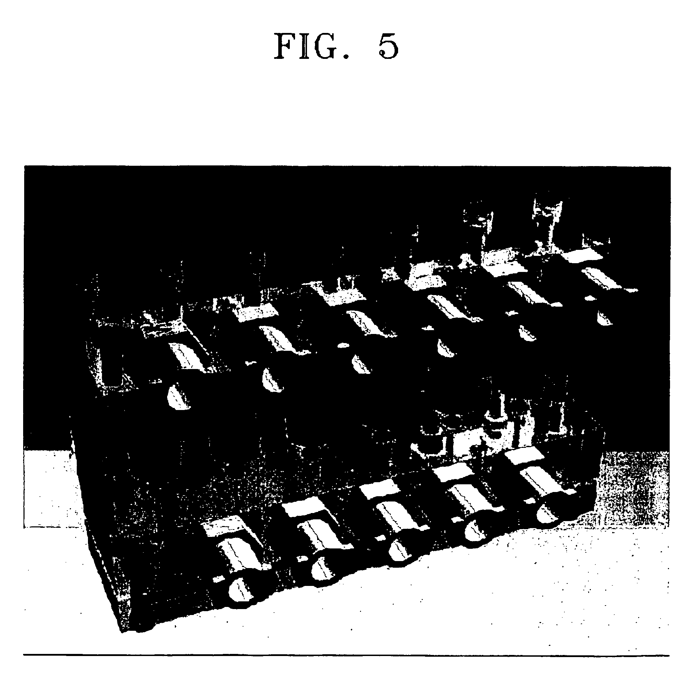

A cartridge according to an embodiment of the present invention that includes the cartridge reservoir part 9, the microfluidic channel 10, the compressed-air inlets 6, the buffer inlet port 4, and the outlets 5, is schematically illustrated in FIG. 3. A 3-dimensional image of the cartridge illustrated using computer graphics is shown in FIG. 5. The cartridge is designed to be detachable from the automated fluidic system according to the present invention for easy measurement of color variation data for samples in the cartridge and for easy exchange, repair, and maintenance of the cartridge.

FIG. 4 is a schematic view of an automated microfluidic system according to an embodiment of the present invention, which includes the cartridge, the compressed-air storage tank, the buffer storage tank, and the reader.

In an embodiment according to the present invention, when detecting a target protein in a sample using the automated microfluidic system according to the present invention, the antigen-antibody reaction may be induced by supplying compressed air through the compressed-air inlet ports to move the sample in the sample reservoir and the control in the control reservoir into the sample and control detection parts, respectively.

Supplying compressed air is initiated by turning on a switch of the pump 12 connected to the compressed-air storage tank. The pump 12 applies a predetermined pressure to the compressed-air storage tank and the buffer storage tank. In this state where all the valves 11a, 11b, and 11c are not opened yet, the cartridge is not affected by the pressure. However, as valves 11c which are connected to the sample and control reservoirs are opened by an automated valve control system, the sample and the control flow along the microfluidic channel 10 and reach the sample and control detection parts, respectively, so that antigen-antibody reactions between the antibodies attached to the internal surface of the microfluidic channel and antigens (target protein) of the sample and the control take place.

When the sample and the control are fully discharged from the sample and control reservoirs, respectively, the valves 11c that are connected between the compressed-air inlet ports 6 and the sample and control reservoirs are closed by the valve control system, the valves 11a and 11b that are connected to the buffer inlet port 4 and the outlets 5 are opened so that the buffer flows into and fills the microfluidic channel 10 connected to the buffer inlet port 4. Once the microfluidic channel 10 has been fully filled with the buffer, the buffer fills the cartridge reservoir part 9 up to the upper hydrophobic barrier 7. As such, the sample and control reservoirs as well as the sample and control detection parts are filled and washed with the buffer.

After washing, the valve 11b connected to the buffer inlet port 4 is closed, and the valves 11c that are connected between the compressed-air inlet ports 6 and the dye reservoir are opened so that the dye in the dye storage reservoir flows into the microfluidic channel 10 through the dye inlets 3 of the dye/buffer inlet part. The distances between the dye inlets 3 and the outlets 5 of the sample and control detection parts are the same so that equal amounts of a dye flows along the microfluidic channel 10 into the sample and control detection parts to which the antibodies 13 are attached.

After the dye solution is fully discharged, the valves 11c connected between the dye reservoir and the compressed-air inlet ports 6 are closed, and the valve 11b connected to the buffer inlet port 4 is opened to allow the buffer to flow along the entire microfluidic channel 10 and wash off the dye remaining in the sample and control detection parts.

Finally, after washing the cartridge, color variation data for the sample and control reacted in the sample and control detection parts, respectively, of the cartridge are read by a photodetector. It can be determined whether a particular protein is present in the sample based on the read color variation data. The concentration of the particular protein in the sample can be calculated using a calibration curve of the control.

As described above, an automated microfluidic system according to the present invention that detects a particular protein in a biological sample by ELISA can automate a series of assaying processes, beginning with sample injection and ending with detection, with a simple structure, thereby allowing for convenient and quick detection of a particular protein in a biological sample without requiring skillful, elaborate manipulations by an operator.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An automated microfluidic system that detects a protein in a biological sample, the system comprising:
a cartridge reservoir part (9) including a sample reservoir, a dye reservoir, and a plurality of control reservoirs that contain control solutions of various concentrations of the protein of interest , each of the sample reservoir, the dye reservoir, and the control reservoirs having a hydrophobic upper barrier (7) connected to a compressed-air inlet (6) and a hydrophobic lower barrier (8) connected to a liquid outlet;
a cartridge with a microfluidic channel (10) that includes a sample detection part, a plurality of control detection parts, and a dye /buffer inlet part, each of the sample detection part and the control detection parts that have inlets connected to the liquid outlets of the sample reservoir and control reservoirs, respectively, an outlet, and antibodies (13) immobilized on an inner surface, the dye /buffer inlet part having a dye inlet (3) connected to a liquid outlet of the dye reservoir and a buffer inlet port (4);
a compressed-air storage tank connected to the compressed-air inlets (6) of the sample reservoir, the dye reservoirs, and the control reservoirs by valves (11c); a buffer storage tank connected to the buffer inlet ports (4) by valves (11b): and
a reader that measures the degrees of antigen-antibody reactions in the sample and control detection parts based on variations in dye color.

2. The automated microfluidic system of claim 1, wherein the upper hydrophobic barrier (7) and the lower hydrophobic barrier (6) allow only air to pass, not liquid, in an atmospheric pressure.

3. The automated microfluidic system of claim 1, wherein the upper hydrophobic barrier (7) and the lower hydrophobic barrier (8) are porous, and the lower hydrophobic barrier (8) has a larger average pore size than the upper hydrophobic barrier (7).

4. The automated microfluidic system of claim 3, wherein the upper hydrophobic barrier (7) has an average pore diameter that ranges from 0.2 µm to 1 µm, and the lower hydrophobic barrier (8) has an average pore diameter that ranges from 2 µm to 20 µm.

5. The automated microfluidic system of claim 1, wherein the upper hydrophobic barrier (7) and the lower hydrophobic barrier (8) are made of porous polytetrafluoro ethylene membranes.

6. The automated microfluidic system of claim 1, further comprising a pump (12) connected to the compressed-air storage tank and the buffer storage tank.

7. The automated microfluidic system of claim 1, wherein the sample detection part and the control detection parts have the same volume.

8. The automated microfluidic system of claim 1, wherein the length of a portion of the microfluidic channel (10) between the dye inlet (3) of the dye /buffer inlet part and the outlet (5) of the sample detection part is equal to the length of a portion of the microfluidic channel (10) between the dye inlet (3) of the dye /buffer inlet part and the outlet (5) of one of the control detection parts.

9. The automated microfluidic system of claim 1, wherein the length of a portion of the microfluidic channel (10) between the buffer inlet port (4) of the dye /buffer inlet part and the outlet (5) of the sample detection part is equal to the length of a portion of the microfluidic channel (10) between the dye inlet (3) of the dye /buffer inlet part and the outlet(5) of one of the control detection parts.

10. The automated microfluidic system of claim 1, wherein the valves (11c) that connect the compressed-air inlets (6) and the compressed-air storage tank are three-way valves that are closed to allow external air to flow into the compressed-air inlet ports and are opened toward the compressed-air storage tank.

11. The automated microfluidic system of claim 1, further comprising a controller that controls the opening and closing of the outlets (5) of the sample detection part and the control detection parts.

12. A method of detecting a protein in a biological sample using the automated microfluidic system according to claim 1, the method comprising:
supplying compressed air through the compressed-air inlets (6) to move a sample in the sample reservoir and controls in the control reservoirs into the sample detection part and the control detection parts, respectively, to induce antigen-antibody reactions therein; washing the sample detection part and the control detection parts by supplying a buffer through the buffer inlet port (4);
supplying compressed air through the compressed-air inlets (6) to move a dye in the dye reservoir through the dye /buffer inlet part into the sample detection part and the control detection parts;
washing the sample detection part and the control detection parts by supplying a buffer through the buffer inlet port (4); and
detecting whether the protein exists in the biological sample and quantitating the protein based on color variation data obtained from the antigen-antibody reactions in the sample detection part and the control detection parts.

## Patentansprüche

1. Ein automatisiertes Mikrofluidsystem, das ein Protein in einer biologischen Probe nachweist, wobei das System das Folgende umfasst:
ein Kartuschentankbauteil (9), umfassend einen Probentank, einen Farbstofftank und eine Vielzahl von Kontrolltanks, die Kontrolllösungen mit verschiedenen Konzentrationen des Proteins von Interesse enthalten, wobei jeweils der Probentank, der Farbstofftank und die Kontrolltanks eine hydrophobe obere Absperrung (7), die mit einem Drucklufteinlass (6) verbunden ist, sowie eine hydrophobe untere Absperrung (8), die mit einem Flüssigkeitsauslass verbunden ist, aufweisen;
eine Kartusche mit einem Mikrofluidkanal (10), die ein Probennachweisbauteil, eine Vielzahl von Kontrollnachweisbauteilen und ein Farbstoff/Puffer-Einlassbauteil aufweist, wobei jeweils das Probennachweisbauteil und die Kontrollnachweisbauteile Einlässe, die jeweils mit den Flüssigkeitsauslässen des Probentanks und der Kontrolltanks verbunden sind, einen Auslass und Antikörper (13) aufweisen, die auf einer inneren Oberfläche immobilisiert sind, und wobei das Farbstoff/Puffer-Einlassbauteil einen Farbstoffeinlass (3), der mit einem Flüssigkeitsauslass des Farbstofftanks verbunden ist, und einen Puffereinlassanschluss (4) aufweist;
einen Speichertank für Druckluft, der mit den Einlässen für Druckluft (6) des Probentanks, der Farbstofftanks und der Kontrolltanks durch Ventile (11c) verbunden ist;
einen Speichertank für Puffer, der mit den Puffereinlassanschlüssen (4) durch Ventile (11b) verbunden ist; und
ein Lesegerät, das den Umfang der Antigen-Antikörperreaktionen in den Proben- und Kontrollnachweisbauteilen basierend auf den Variationen in der Farbstofffarbe misst.

2. Das automatisierte Mikrofluidsystem von Anspruch 1, wobei die obere hydrophobe Absperrung (7) und die untere hydrophobe Absperrung (8) bei Atmosphärendruck nur Luft, nicht aber Flüssigkeit durchlassen.

3. Das automatisierte Mikrofluidsystem von Anspruch 1, wobei die obere hydrophobe Absperrung (7) und die untere hydrophobe Absperrung (8) porös sind und die untere hydrophobe Absperrung (8) eine größere durchschnittliche Porengröße als die obere hydrophobe Absperrung (7) aufweist.

4. Das automatisierte Mikrofluidsystem von Anspruch 3, wobei die obere hydrophobe Absperrung (7) einen durchschnittlichen Porendurchmesser im Bereich von 0,2 µm bis 1 µm aufweist und die untere hydrophobe Absperrung (8) einen durchschnittlichen Porendurchmesser im Bereich von 2 µm bis 20 µm aufweist.

5. Das automatisierte Mikrofluidsystem von Anspruch 1, wobei die obere hydrophobe Absperrung (7) und die untere hydrophobe Absperrung (8) aus porösen Polytetrafluorethylenmembranen hergestellt sind.

6. Das automatisierte Mikrofluidsystem von Anspruch 1, das zusätzlich eine Pumpe (12) umfasst, die mit dem Speichertank für Druckluft und dem Speichertank für Puffer verbunden ist.

7. Das automatisierte Mikrofluidsystem von Anspruch 1, wobei das Probennachweisbauteil und die Kontrollnachweisbauteile das gleiche Volumen aufweisen.

8. Das automatisierte Mikrofluidsystem von Anspruch 1, wobei die Länge eines Teils des Mikrofluidkanals (10) zwischen dem Farbstoffeinlass (3) des Farbstoff/Puffer-Einlassbauteils und dem Auslass (5) des Probennachweisbauteils zu der Länge eines Teils des Mikrofluidkanals (10) zwischen dem Farbstoffeinlass (3) des Farbstoff/Puffer-Einlassbauteils und dem Auslass (5) von einem der Kontrollnachweisbauteile gleich ist.

9. Das automatisierte Mikrofluidsystem von Anspruch 1, wobei die Länge eines Teils des Mikrofluidkanals (10) zwischen dem Puffereinlassanschluss (4) des Farbstoff/Puffer-Einlassbauteils und dem Auslass (5) des Probennachweisbauteils zu der Länge eines Teils des Mikrofluidkanals (10) zwischen dem Farbstoffeinlass (3) des Farbstoff/Puffer-Einlassbauteils und dem Auslass (5) von einem der Kontrollnachweisbauteile gleich ist.

10. Das automatisierte Mikrofluidsystem von Anspruch 1, wobei die Ventile (11c), die die Einlässe für Druckluft (6) und den Speichertank für Druckluft miteinander verbinden, Dreiwegeventile sind, die geschlossen werden, um es Aussenluft zu ermöglichen, in die Einlassanschlüsse für Druckluft zu fließen, und zum Speichertank für Druckluft hin geöffnet sind.

11. Das automatisierte Mikrofluidsystem von Anspruch 1, das zusätzlich ein Steuergerät umfasst, das das Öffnen und Schließen der Auslässe (5) des Probennachweisbauteils und der Kontrollnachweisbauteile steuert.

12. Ein Verfahren zum Nachweis eines Proteins in einer biologischen Probe unter Verwendung des automatisierten Mikrofluidsystems gemäß Anspruch 1, wobei das Verfahren das Folgende umfasst:
das Einspeisen von Druckluft durch die Einlässe für Druckluft (6) zur jeweiligen Überführung einer Probe in dem Probentank und von Kontrollen in den Kontrolltanks in das Probennachweisbauteil und die Kontrollnachweisbauteile zum Induzieren von Antigen-Antikörperreaktionen darin;
das Waschen des Probennachweisbauteils und der Kontrollnachweisbauteile durch das Einspeisen eines Puffers durch den Puffereinlassanschluss (4);
das Einspeisen von Druckluft durch die Einlässe für Druckluft (6), um einen Farbstoff in dem Farbstofftank durch das Farbstoff/Puffer-Einlassbauteil in das Probennachweisbauteil und die Kontrollnachweisbauteile zu führen;
das Waschen des Probennachweisbauteils und der Kontrollnachweisbauteile durch das Einspeisen eines Puffers durch den Puffereinlassanschluss (4); und
das Nachweisen, ob das Protein in der biologischen Probe existiert, und das Quantifizieren des Proteins basierend auf den Daten der Farbvariation, die von den Antigen-Antikörperreaktionen in dem Probennachweisbauteil und den Kontrollnachweisbauteilen erhalten werden.

## Revendications

1. Système micro-fluidique automatisé qui détecte une protéine dans un échantillon biologique, le système comportant :
une partie de réservoir de cartouche (9) incluant un réservoir d'échantillon, un réservoir de colorant, et une pluralité de réservoirs de témoin qui contiennent des solutions témoin de diverses concentrations de la protéine d'intérêt, chacun parmi le réservoir d'échantillon, le réservoir de colorant et les réservoirs de témoin ayant une barrière supérieure hydrophobe (7) connectée à une entrée d'air comprimé (6) et une barrière inférieure hydrophobe (8) connectée à une sortie de liquide,
une cartouche ayant un canal micro-fluidique (10) qui inclut une partie de détection d'échantillon, une pluralité de parties de détection de témoin, et une partie d'entrée de colorant/tampon, chacune parmi la partie de détection d'échantillon et les parties de détection de témoin ont des entrées connectées aux sorties de liquide du réservoir d'échantillon et des réservoirs de témoin, respectivement, une sortie, et des anticorps (13) immobilisés sur une surface intérieure, la partie d'entrée de colorant/tampon ayant une entrée de colorant (3) connectée à une sortie de liquide du réservoir de colorant et un orifice d'entrée de tampon (4),
un réservoir de stockage d'air comprimé connecté aux entrées d'air comprimé (6) du réservoir d'échantillon, des réservoirs de colorant, et des réservoirs de témoin par des vannes (11c), un réservoir de stockage de tampon connecté aux orifices d'entrée de tampon (4) par des vannes, et
un lecteur qui mesure les degrés de réaction antigène-anticorps dans l'échantillon et des parties de détection de témoin basées sur des variations de couleur du colorant.

2. Système micro-fluidique automatisé selon la revendication 1, dans lequel la barrière hydrophobe supérieure (7) et la barrière hydrophobe inférieure (8) laissent uniquement passer de l'air, pas un liquide, dans une pression atmosphérique.

3. Système micro-fluidique automatisé selon la revendication 1, dans lequel la barrière hydrophobe supérieure (7) et la barrière hydrophobe inférieure (8) sont poreuses, et la barrière hydrophobe inférieure (8) a une taille moyenne de pore plus grande que la barrière hydrophobe supérieure (7).

4. Système micro-fluidique automatisé selon la revendication 3, dans lequel la barrière hydrophobe supérieure (7) a un diamètre moyen de pore qui se trouve dans la plage de 0,2 µm à 1 µm, et la barrière hydrophobe inférieure (8) a un diamètre moyen de pore qui se trouve dans la plage de 2 µm à 20 µm.

5. Système micro-fluidique automatisé selon la revendication 1, dans lequel la barrière hydrophobe supérieure (7) et la barrière hydrophobe inférieure (8) sont constituées de membranes de polytétrafluoroéthylène poreux.

6. Système micro-fluidique automatisé selon la revendication 1, comportant de plus une pompe (12) connectée au réservoir de stockage d'air comprimé et au réservoir de stockage de tampon.

7. Système micro-fluidique automatisé selon la revendication 1, dans lequel la partie de détection d'échantillon et les parties de détection de témoin ont le même volume.

8. Système micro-fluidique automatisé selon la revendication 1, dans lequel la longueur d'une partie du canal micro-fluidique (10) entre l'entrée de colorant (3) de la partie d'entrée de colorant/tampon et la sortie (5) de la partie de détection d'échantillon est égale à la longueur d'une partie du canal micro-fluidique (10) entre l'entrée de colorant (3) de la partie d'entrée de colorant/tampon et la sortie (5) d'une des parties de détection de témoin.

9. Système micro-fluidique automatisé selon la revendication 1, dans lequel la longueur d'une partie du canal micro-fluidique (10) entre l'orifice d'entrée de tampon (4) de la partie d'entrée de colorant/tampon et la sortie (5) de la partie de détection d'échantillon est égale à la longueur d'une partie du canal micro-fluidique (10) entre l'entrée de colorant (3) de la partie d'entrée de colorant/tampon et la sortie (5) d'une des parties de détection de témoin.

10. Système micro-fluidique automatisé selon la revendication 1, dans lequel les soupapes (11c) qui connectent les entrées d'air comprimé (6) et le réservoir de stockage d'air comprimé sont des soupapes à trois voies qui sont fermées pour permettre à l'air externe de circuler dans les orifices d'entrée d'air comprimé et sont ouvertes vers le réservoir de stockage d'air comprimé.

11. Système micro-fluidique automatisé selon la revendication 1, comportant de plus un dispositif de commande qui commande l'ouverture et la fermeture des sorties (5) de la partie de détection d'échantillon et des parties de détection de témoin.

12. Procédé pour détecter une protéine dans un échantillon biologique utilisant le système micro-fluidique automatisé selon la revendication 1, le procédé comportant les étapes consistant à :
alimenter de l'air comprimé à travers les entrées d'air comprimé (6) pour déplacer un échantillon dans le réservoir d'échantillon et des témoins dans les réservoirs de témoin dans la partie de détection d'échantillon et les parties de détection de témoin, respectivement, pour induire des réactions antigène-anticorps à l'intérieur ; laver la partie de détection d'échantillon et les parties de détection de témoin en alimentant un tampon à travers l'orifice d'entrée de tampon (4) ;
alimenter de l'air comprimé à travers les entrées d'air comprimé (6) pour déplacer un colorant dans le réservoir de colorant à travers la partie d'entrée de colorant/tampon dans la partie de détection d'échantillon et les parties de détection de témoin ;
laver la partie de détection, d'échantillon et les parties de détection de témoin en alimentant un tampon à travers l'orifice d'entrée de tampon (4) ; et
détecter si la protéine existe dans l'échantillon biologique et quantifier la protéine sur la base des données de variation de couleur obtenues à partir des réactions antigène-anticorps dans la partie de détection d'échantillon et les parties de détection de témoin.
